# EUROPEAN PATENT APPLICATION

(11) **EP 4 604 618 A1**
(43) Date of publication of application: **20.08.2025**
(21) Application number: 23877709.8
(22) Date of filing: 12.10.2023
(51) Int. Cl.: H04W 36/18, H04W 36/08, H04W 36/00, H04W 48/08, H04W 48/16, H04W 84/12, H04W 88/08

(54) **METHOD AND DEVICE FOR ESTABLISHING ASSOCIATION WITH MULTIPLE ACCESS POINTS IN WIRELESS LAN SYSTEM**

(30) Priority: 13.10.2022 KR 20220131776
(71) Applicant: LG Electronics Inc., Yeongdeungpo-gu Seoul 07336 (KR)
(72) Inventor: YOON, Yelin, Seoul 06772 (KR); CHOI, Jinsoo, Seoul 06772 (KR); JANG, Insun, Seoul 06772 (KR); BAEK, Sunhee, Seoul 06772 (KR)
(74) Representative: Frenkel, Matthias Alexander
(86) International application number: PCT/KR2023/015745
(87) International publication number: WO 2024/080786

(57) **Abstract**

The present disclosure discloses a method and a device for establishing association with multiple access points (APs) in a wireless LAN system. A method carried out by a station (STA) in a wireless LAN system, according to one embodiment of the present disclosure, may comprise the steps of: receiving, from a specific AP, a beacon frame including information related to an AP set to which the specific AP belongs; transmitting, to the specific AP, a first frame for requesting association between the STA and multiple APs belonging to the AP set; and receiving, from the specific AP, a second frame corresponding to a response to the first frame. Here, at least one of the first frame or the second frame may include association-related information for each AP included in the multiple APs.

## Description

### [TECHNICAL FIELD]

The present disclosure relates to a method and device for establishing an association with a plurality of access points (APs) in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [DISCLOSURE]

### [TECHNICAL PROBLEM]

A technical object of the present disclosure is to provide a method and device for establishing an association with a plurality of access points (APs) in a wireless local area network (WLAN) system.

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) in a wireless LAN system according to an aspect of the present disclosure may comprise: receiving, from a specific access point (AP), a beacon frame including information related to an AP set to which the specific AP belongs; transmitting, to the specific AP, a first frame for requesting association between a plurality of APs belonging to the AP set and the STA; and receiving, from the specific AP, a second frame corresponding to a response to the first frame. Herein, at least one of the first frame or the second frame may include association-related information for each AP included in the plurality of APs.

A method performed by an access point (AP) in a wireless LAN system according to an additional aspect of the present disclosure may comprise: transmitting, to a station (STA), a beacon frame including information related to an AP set to which the AP belongs; receiving, from the STA, a first frame for requesting association between a plurality of APs belonging to the AP set and the STA; and transmitting, to the STA, a second frame corresponding to a response to the first frame. Herein, at least one of the first frame or the second frame may include association-related information for each AP included in the plurality of APs.

### [Technical Effects]

According to the present disclosure, a method and device for establishing association with multiple access points (APs) in a wireless local area network (WLAN) system may be provided.

According to the present disclosure, there is an advantage in that delay that may occur when an STA performs roaming from an existing AP to another AP may be alleviated based on association with multiple APs.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram showing an exemplary relationship between a multiple BSSID set and a multi-link device to which the present disclosure can be applied.
FIG. 9 is a diagram showing examples of multi-AP schemes to which the present disclosure can be applied.
FIG. 10 is a diagram showing an example for explaining roaming to which the present disclosure can be applied.
FIG. 11 is an example of a multi-AP set according to an embodiment of the present disclosure.
FIG. 12 is an example of a target beacon transmission time (TBTT) information field in a reduced neighbor report (RNR) element for multi-association according to an embodiment of the present disclosure.
FIG. 13 is an example of a multi-AP element for multi-association according to an embodiment of the present disclosure.
FIG. 14 illustrates an association process for multiple association according to an embodiment of the present disclosure.
FIG. 15 is a diagram for explaining the operation of an STA for establishing multi-association according to an embodiment of the present disclosure.
FIG. 16 is a diagram for explaining the operation of an AP for establishing multi-association according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11 be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

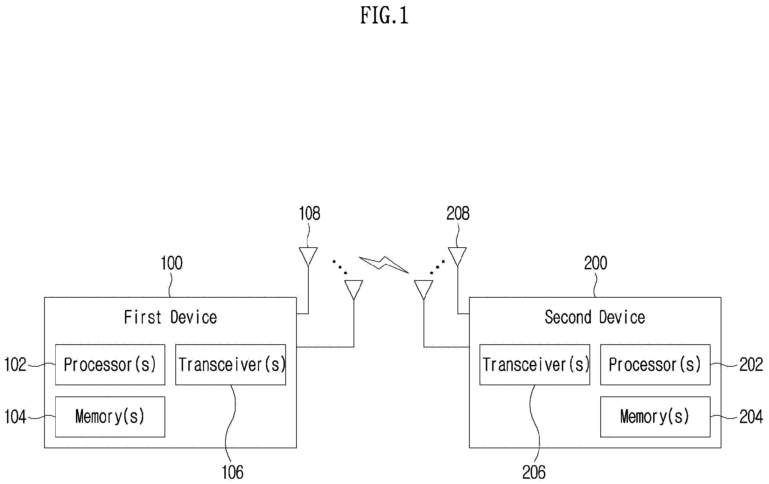

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

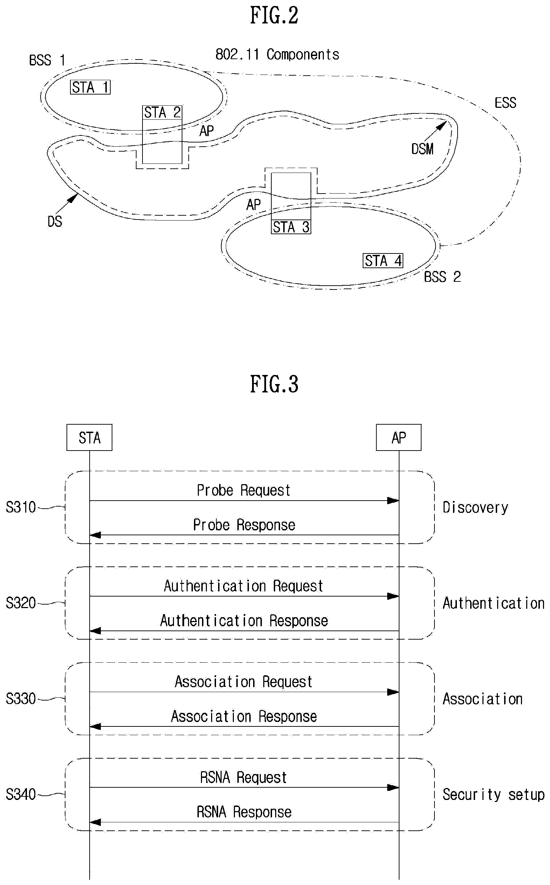

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

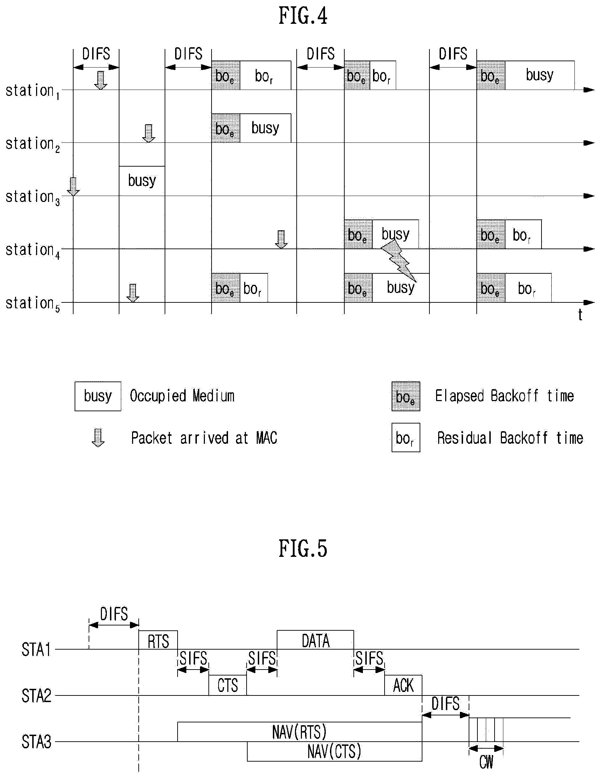

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

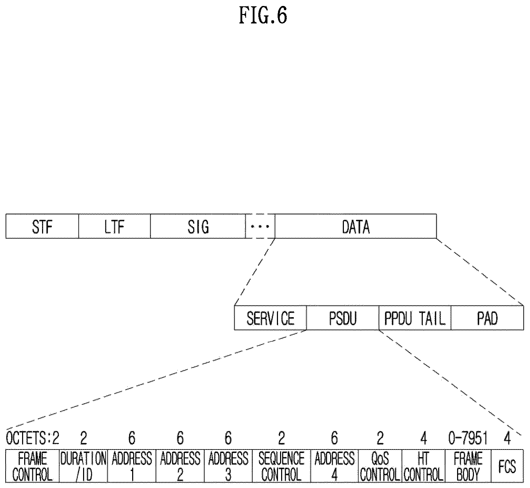

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

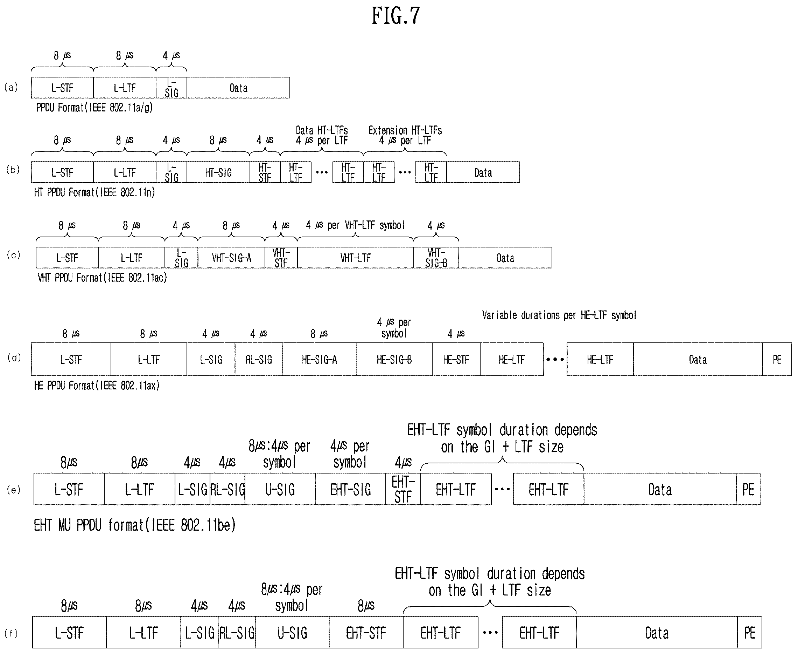

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multi-link operation

Hereinafter, the multi-link (ML) operation supported by the STA according to the present disclosure is described.

The STA (AP STA and/or non-AP STA) described in the present disclosure may support multi-link (ML) communication. The ML communication may mean communication supporting multiple links. The link related to the ML communication may include a channel (e.g., 20/40/80/160/240/320MHz channel) of a frequency band (e.g., 2.4GHz band, 5GHz band, 6GHz band, etc.) in which the STA operates. The multiple links used for the ML communication may be configured in various ways. For example, the multiple links supported for one STA for the ML communication may belong to the same frequency band or may belong to different frequency bands. In addition, each link may correspond to a frequency unit of a predetermined size (e.g., a channel, a subchannel, an RU, etc.). In addition, some or all of the multiple links may be frequency units of the same size or may be frequency units of different sizes.

When one STA supports multiple links, the transmitting and receiving devices supporting each link may operate as one logical STA. That is, an MLD means a device having one or more affiliated STAs as a logical entity and a single MAC service access point (SAP) for one MAC data service and logical link control (LLC). A non-AP MLD means an MLD in which each STA affiliated to the MLD is a non-AP STA. A multi-radio non-AP MLD means a non-AP MLD that supports reception or exchange of frames on more than one link at a time. An AP MLD means an MLD in which each STA affiliated to the MLD is an AP STA.

Multi-link operation (MLO) may enable a non-AP MLD to discover, authenticate, associate, and set up multiple links with an AP MLD. Based on the supported capabilities exchanged during the association procedure, each link may enable channel access and frame exchange between the non-AP MLD and the AP MLD. An STA affiliated to an MLD may select and manage its capabilities and operating parameters independently from other STA(s) affiliated to the same MLD.

Through the multi-link setup process, the AP MLD and/or the non-AP MLD may transmit and receive information related to link(s) that the MLD can support. The link-related information may include one or more of information for whether the MLD supports simultaneous transmit and receive (STR) operation or non-simultaneous transmit and receive (NSTR) operation that cannot support simultaneous transmission and reception on multiple links, information for the number/upper limit of UL/DL links, information for the location/bandwidth/resource of UL/DL links, information for frame types (e.g., management, control, data, etc.) that are available or preferred in at least one UL/DL link, information for an ACK policy that is available or preferred in at least one UL/DL link, or information for a traffic identifier (TID) that is available in at least one UL/DL link.

An AP MLD (e.g., NSTR mobile AP MLD) may configure one of the multiple links as a primary link. The AP MLD may perform beacon frames, probe response frames, and group addressed data frames only on the primary link. The remaining other link(s) of the multiple links may be referred to as non-primary links. An AP MLD operating on a non-primary link may operate not to transmit a beacon frame or a probe response frame. In addition, the non-AP MLD may perform frame exchange during authentication, (re)association, and 4-way handshaking only on the primary link.

A setup link is defined as enabled if at least one traffic identifier (TID) is mapped to the link through a multi-link setup process, and a setup link may be defined as disabled if no TID is mapped to the link. A TID shall always be mapped to at least one setup link unless admission control is used. By default, a TID is mapped to all setup links, so that all setup links may be enabled.

When a link is enabled, the link may be used for frame exchange depending on the power state of the non-AP STA operating on the link. Only MSDUs or A-MSDUs with a TID mapped to the enabled link may be transmitted on the link. Management frames and control frames may only be transmitted on the enabled link.

When a link is disabled, the link may not be used for frame exchange, including management frames for both DL and UL.

During the multi-link setup process, enable/disable of each link may be indicated through TID-to-Link mapping. TID-to-Link mapping may be performed in default mapping mode or/and negotiation mapping mode.

One of the STAs belonging to the MLD may provide information for one or more links other than the link on which it is located, for multi-link discovery (e.g., obtaining information for multiple links including the corresponding link on one link) or multi-link setup (e.g., simultaneously associating on multiple links through exchange of association request/response frames on one link).

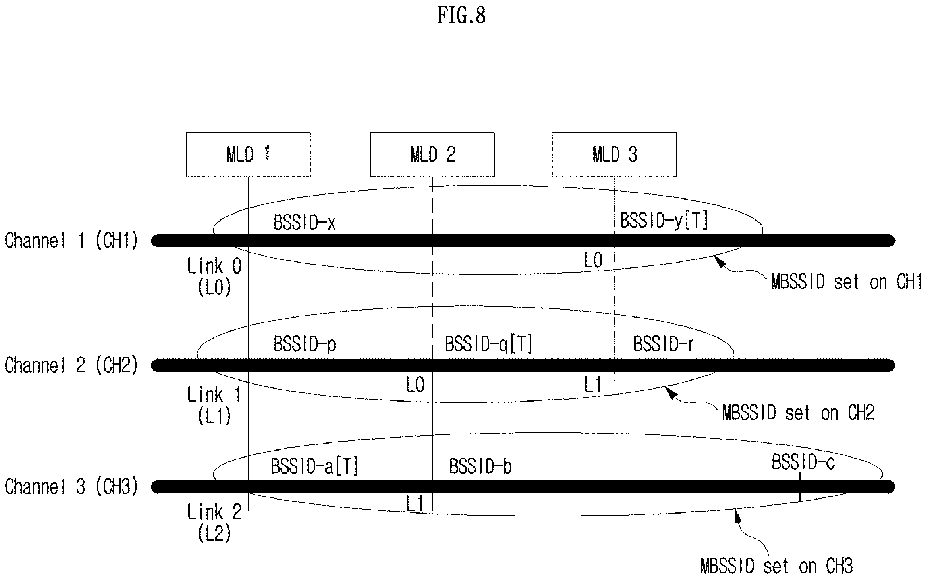

FIG. 8 is a diagram showing an exemplary relationship between multiple BSSID sets and multi-link devices to which the present disclosure may be applied.

Multi-BSSID operation may include one physical access point (AP) operating on a single channel to create multiple virtual APs. In the following description, multi-BSSID may also be referred to as MBSSID.

An MBSSID set may include one or more non-transmitted BSSIDs and may define one transmitted BSSID.

In the example of FIG. 8, x, y, p, q, r, a, b correspond to exemplary values of BSSID, [T] represents a transmitted BSSID (or Tx BSSID), and a BSSID not indicated by [T] represents a non-transmitted BSSID (or non-Tx BSSID).

In the example of FIG. 8, when considering MBSSID operation and ML operation simultaneously, a BSSID within one MBSSID set may belong to an MLD, and each of multiple links belonging to one MLD may correspond to one channel (or a BSSID operating on the corresponding channel). Different MLDs may operate on multiple links on the same or different channels. For example, link 0 (L0), link 1 (L1), and link 2 (L2) of MLD1 may be set on CH1, CH2, and CH3, respectively. For example, L0 and L1 of MLD2 may be set on CH2 and CH3, respectively. For example, L0 and L1 of MLD3 may be set on CH1 and CH2, respectively. BSSID-c may not belong to an MLD.

In this regard, APs belonging to one MBSSID belong to different ESSs, and APs belonging to one AP MLD belong to the same ESS. That is, APs belonging to a set of MBSSIDs cannot belong to the same AP MLD.

### Multi-AP operation mode

Multi-AP operation may correspond to a scheme in which one or more APs transmit and receive information to one or more STAs.

In the case of the conventional single transmission (S-Tx) method, i.e., the method in which a BSS AP transmits to a BSS STA, a problem of reduced performance may occur when the AP performs transmission and reception with users (e.g., STAs) at the cell edge due to interference with adjacent APs.

In contrast, in the case of the multi-AP technique, performance may be improved through methods such as reducing inter-symbol interference (ISI) through coordination with neighboring APs or through joint transmission. In other words, in the multi-AP scheme, information is shared between APs and cooperation between APs is possible.

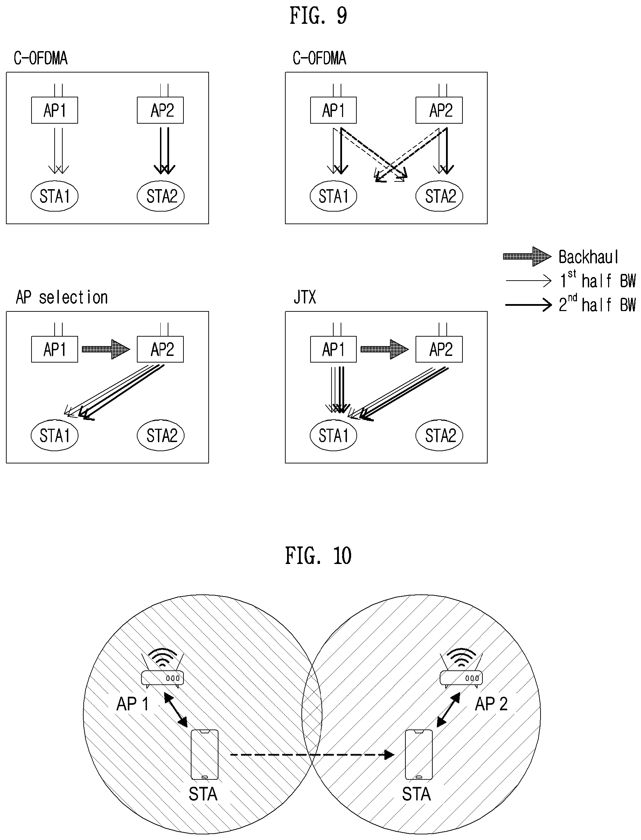

FIG. 9 is a diagram showing examples of multi-AP schemes to which the present disclosure may be applied.

Referring to FIG. 9, as examples of multi-AP schemes, (a) of FIG. 9 illustrates coordinated OFDMA (C-OFDMA), (b) of FIG. 9 illustrates coordinated beamforming (CBF), (c) of FIG. 9 illustrates AP selection, and (d) of FIG. 9 illustrates joint transmission (J-Tx).

For example, as a multi-AP scheme, a coordinated TDMA (C-TDMA) scheme that divides allocation between APs along the time axis, a C-OFDMA scheme that divides along the frequency axis, or a coordinated spatial reuse (C-SR) scheme that utilizes spatial reuse may be considered. As an example, referring to (a) of FIG. 9, resource allocation for AP 1 and STA 1 and resource allocation for AP 2 and STA 2 may be separated in the frequency domain.

Additionally or alternatively, as a multi-AP scheme, a CBF schemeor a coordinated nulling (CN) scheme that nulls interference affecting neighbors and transmits may be considered, and an AP selection scheme that configures/defines an AP with a better channel condition among neighboring APs (i.e., adjacent APs) to perform transmission may also be considered. For example, in the example of (c) of FIG. 9, since AP 2 is determined to have a better channel condition than AP 1, AP 2 may perform transmission to STA 1.

Additionally or alternatively, as a multi-AP scheme, a J-Tx scheme (e.g., joint beamforming, joint MU-MIMO), in which multiple APs cooperate to perform simultaneous transmission or reception, may be considered. The example of (d) of Fig. 9 corresponds to a method in which multiple APs transmit data to STA 1.

In the multi-AP scheme described above, the multi-AP environment may be composed of a master AP, a slave AP, and a STA. In this regard, the master AP may be referred to as a sharing AP, and the slave AP may be referred to as a shared AP.

Here, the master AP may play a role in initiating and controlling a multi-AP operation corresponding to a technology for transmission and reception by multiple APs. Additionally, the master AP may group slave AP(s) and manage a link with the slave AP(s) so that information may be shared between the slave APs. Additionally, the master AP may manage information on a BSS configured by the slave AP(s) and information on STA(s) associated with the corresponding BSS.

By establishing an association with a master AP, a slave AP may share control information, management information, data traffic, etc. with each other. Additionally, a slave AP may basically perform the same function as an AP that may establish a BSS in a conventional wireless LAN system.

As in a conventional wireless LAN system, an STA may construct a BSS by associating with an AP (i.e., a master AP or a slave AP).

In a multi-AP environment as described above, the master AP and the slave AP may be capable of direct transmission and reception between each other. Additionally or alternatively, the master AP and the STA may not be capable of direct transmission and reception between each other. Additionally or alternatively, the slave AP (associated with the STA) and the STA may be capable of direct transmission and reception between each other. Additionally or alternatively, one of the slave APs may be the master AP.

### Method for supporting multiple associations for multiple APs

Since all APs have a limited communication range, it is impossible to support wireless LAN transmission and reception (e.g. Wi-Fi transmission and reception) with only one AP in a wide space.

To solve this problem, multiple APs may be deployed, and a method may be applied in which an STA (e.g., non-AP STA) moves away from the AP with which it is associated and then moves to another AP to perform communication.

This method may be referred to as roaming. At this time, when an STA moves to another AP and performs communication, roaming without any interruption from the user's, i.e., STA's, perspective may be referred to as seamless roaming.

FIG. 10 illustrates a diagram for explaining roaming to which the present disclosure may be applied.

Referring to FIG. 10, the ranges supported by the first AP and the second AP may be respectively indicated by circular areas.

Although only two APs are illustrated in FIG. 10, the proposed method of the present disclosure is not limited thereto, and the proposed method of the present disclosure may be applied even when a larger number of APs are deployed.

A STA may be configured to perform roaming when moving from a range supported by a first AP to a range supported by a second AP.

However, the roaming method in the existing wireless LAN system has limitations in operating seamlessly.

For example, in a single-AP environment, the AP and STA (i.e., non-AP STA) are connected in a one-on-one form, and may not be established simultaneously with another AP. Therefore, in order for the STA to communicate with another AP (e.g., the second AP) for roaming, the STA needs to perform a de-association process with the existing AP (e.g., the first AP) and repeat the authentication process and association process with the new AP (e.g., the second AP). At this time, the longer the delay for performing the process, the longer the time (e.g., the time during which the user, i.e., the STA, cannot communicate due to the wireless LAN connection (e.g., the Wi-Fi connection) being disconnected (e.g., the time during which the user cannot access the Internet).

Additionally or alternatively, roaming delay (hereinafter, roaming delay) may be caused by loss of buffered packets. For example, even if data to be transmitted to the STA is accumulated in the buffer of the first AP, if the STA moves to the second AP, the AP performs new buffering. At this time, roaming delay may occur due to the delay that occurs until the data enters the buffer of the second AP.

In order to solve the roaming delay as described above, the present disclosure proposes a new method based on a multi-AP scheme.

As described above, in the case of AP configuration according to the single-AP scheme, information is not shared between APs. Therefore, in this case, it may be difficult to resolve roaming delay problems that may occur due to re-association, re-authentication, buffered packet loss, etc.

In contrast, in the case of multi-AP schemes, information is shared between APs and coordination is possible.

Therefore, based on the multi-AP scheme, the present disclosure proposes a method of establishing/configuring multiple associations for multiple APs to support seamless roaming.

In the proposed method in the present disclosure, specific names for fields/subfields are only examples and may be changed/replaced with other names, and the described STA may include non-AP STAs and AP STAs.

For clarity of explanation in this disclosure, a set of APs that form multiple associations with STAs among APs operating with a multi-AP scheme is referred to as a multi-AP set.

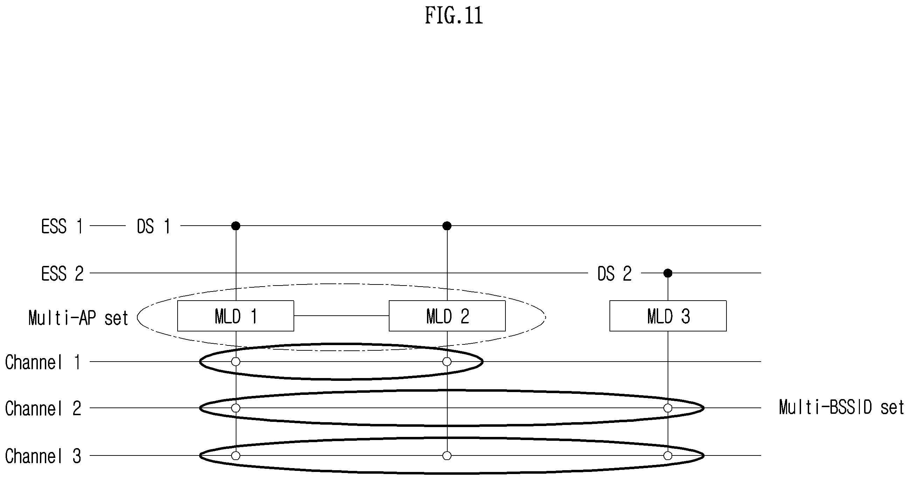

FIG. 11 illustrates a multi-AP set according to an embodiment of the present disclosure.

Referring to FIG. 11, MLD 1 and MLD 2 belong to ESS 1, and MLD 3 belongs to ESS 2. Here, MLD 1 is configured to support channel 1, channel 2, and channel 3, MLD 2 is configured to support channel 1 and channel 3, and MLD 3 is configured to support channel 2 and channel 3.

The multi-AP set proposed in the present disclosure may correspond to a set/group that groups AP MLDs belonging to the same ESS.

For example, MLD 1 and MLD 2 may be configured to belong to the same multi-AP set, and the multi-AP set may also include other AP MLD(s) that belong to the same ESS and support seamless roaming.

That is, a multiple BSSID (MBSSID) set corresponds to a set/group that groups APs belonging to an AP MLD at a lower level (e.g., channel level) than the MLD, whereas a multi-AP set may correspond to a set/group that groups AP MLDs at the MLD level. Accordingly, APs belonging to a multi-AP set may belong to the same MLD, the same MBSSID set, or neither.

Since seamless roaming in the present disclosure is performed at the MLD level, seamless roaming may be used when moving from one AP MLD to another AP MLD. In this case, seamless roaming may be possible between AP MLDs belonging to a multi-AP set. In this regard, link transition may also be used when only a link is changed in the same AP MLD.

Hereinafter, in order to set up/configure the aforementioned multi-association, new reduced neighbor report (RNR) elements and multi-AP (multiple AP, Multi-AP) elements are defined, and an association process based on these is proposed through specific examples.

First, the new RNR element proposed in the present disclosure is described.

The RNR element may include channel and other information for neighboring AP(s), and the RNR element may be transmitted via a beacon, etc.

In this regard, in order to support multi-association based on the multi-AP set proposed in the present disclosure, the master AP may transmit partial information for other AP(s) (i.e., slave AP(s)) belonging to/included in the multi-AP set by adding it to the RNR element. For example, the partial information may include information for a channel, information for a multi-AP ID, information for an AP address, etc.

An RNR element may be defined to include one or more neighbor AP information fields, where each neighbor AP information field may be defined to specify a target beacon transmission time (TBTT) and other information associated with the neighbor AP group.

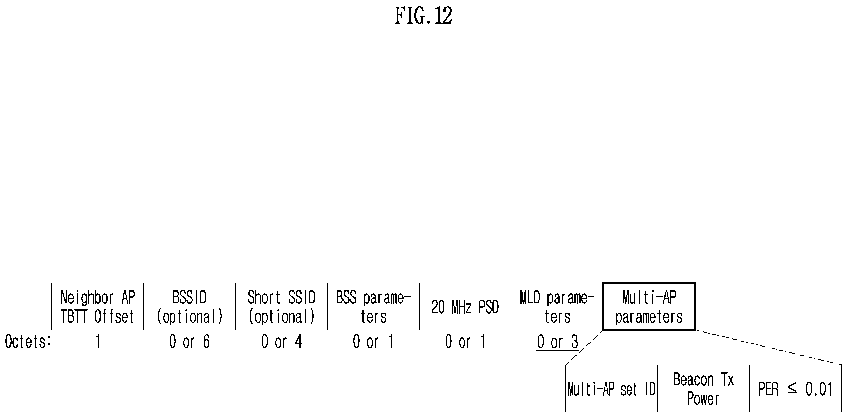

FIG. 12 illustrates a target beacon transmission time (TBTT) information field in a reduced neighbor report (RNR) element for multi-association according to an embodiment of the present disclosure.

The TBTT information field may include a Multi-AP parameter subfield. The subfield may include information related to a multi-AP set to support the multiple binding proposed in the present disclosure.

In this regard, the TBTT information field may include one or more multi-AP parameter subfields for one or more APs (e.g., master AP and/or slave APs).

Here, each multi-AP parameter subfield may be constructed with a multi-AP set ID (Multi-AP swt ID) subfield, a beacon transmit power (Beacon Tx Power) subfield, and a PER≤0.01 subfield. Each subfield may correspond to information required for an STA to determine whether to associate with each AP.

Specifically, the multi-AP set ID subfield may be specified in a numeric form such as ADID or AID. An STA that has received an RNR element may identify/distinguish a multi-AP set to which an AP related to the corresponding multi-AP parameter belongs through the multi-AP set ID subfield.

The Beacon Transmit Power subfield indicates the transmission power used by the AP when transmitting a beacon, and may be specified in dB units.

The PER≤0.01 subfield may indicate information related to a packet error rate. Setting the value of the subfield to 1 may mean that the packet error rate value is 0.01 or less, and setting the value of the subfield to 0 may mean that the packet error rate value is 0.01 or more/exceeds it.

During the discovery process, an AP (i.e., a master AP) may include one or more multi-AP parameter subfields as described above in an RNR element and transmit them to an STA via a beacon. An STA that receives the beacon may select/decide the AP(s) with which it wishes to form an association based on the information included in the RNR element, and may request additional information (e.g., complete information) about the AP(s) from the AP that transmitted the beacon.

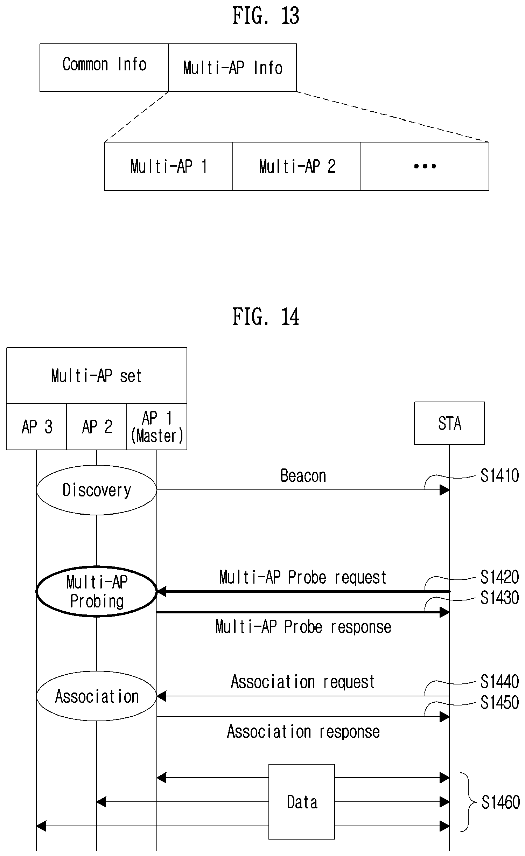

FIG. 13 illustrates a multi-AP element for multi-association according to an embodiment of the present disclosure.

The multi-AP element proposed in the present disclosure may be transmitted and included in a probe response frame or a (re)association request/response frame transmitted and received in the process for multi-association.

Referring to FIG. 13, a multi-AP element may be constructed with a common information field and a multi-AP information field.

Here, the common information field may contain common information for multi-AP (set).

The multi-AP information field may be configured with complete information, i.e., a complete profile, for each AP included/belonging to the multi-AP set in a subelement format.

For example, the multi-AP information field may be constructed with one or more sub-elements for one or more APs belonging to the multi-AP set (e.g., multi-AP N, where N is a positive integer greater than or equal to 1). Each multi-AP N sub-element (e.g., Multi-AP 1 sub-element, Multi-AP 2 sub-element, etc.) may be constructed with information in an association response frame that the AP provides to the STA in a single-AP environment. That is, each multi-AP N sub-element may include information provided by the AP to establish an association with the corresponding AP. In this case, information included in the common information field may not be included in each multi-AP N sub-element.

FIG. 14 illustrates an association process for multi-association according to an embodiment of the present disclosure.

Referring to FIG. 14, the association process is described by taking as a representative example a case where a multi-AP set is configured with three APs, namely AP 1, AP 2, and AP 3, but is not limited thereto and may be extended and applied even when a multi-AP set is configured with a combination of a different number of APs.

At this time, a transmission/reception procedure between AP 1 corresponding to the master AP and the STA can be performed to establish/configure multi-association for a multi-AP set.

The master AP may continuously broadcast a beacon to surrounding STA(s) for discovery (S1410).

At this time, the AP may transmit partial information for other APs (e.g., AP 2, AP 3) included in the multi-AP set by adding it to the RNR element within the beacon (e.g., the TBTT information field within the RNR element in FIG. 11).

An STA that receives a beacon transmitted by a master AP may request complete information for other APs (e.g., AP 2, AP 3) from the master AP through a multi-AP probe request frame based on partial information transmitted through the beacon (S1420).

The master AP may transmit to the STA, through a multi-AP probe request frame, complete information for other APs (e.g., AP 2, AP 3) in a multi-AP element (e.g., multi-AP element in FIG. 12) (S1430).

In this regard, the transmission and reception of the probe request/response frame may be referred to as multi-AP probing and may correspond to an enhanced discovery process for all APs included in the multi-AP set. In this case, the transmission and reception of the probe request/response frame may be omitted based on predefined configurations/conditions.

An STA that has received complete information for other APs (e.g., AP 2, AP 3) may transmit an association request frame to the master AP based on the information (S1440) and receive an association response frame from the master AP (S1450). Through such transmission and reception of association request/response frames, the STA may establish multi-association with all APs included in the multi-AP set.

In this regard, the aforementioned multi-AP elements (e.g., the multi-AP elements in FIG. 13) may be included and transmitted in the corresponding association request/response frame.

Afterwards, data transmission and reception between the STA and the multi-AP set may be performed (S1460). At this time, the data transmission and reception may be performed based on seamless roaming between APs belonging to the multi-AP set, and/or link switching for some links.

Hereinafter, in relation to embodiments of the present disclosure, operations of STAs and APs for establish multi-assocation for a multi-AP set are described.

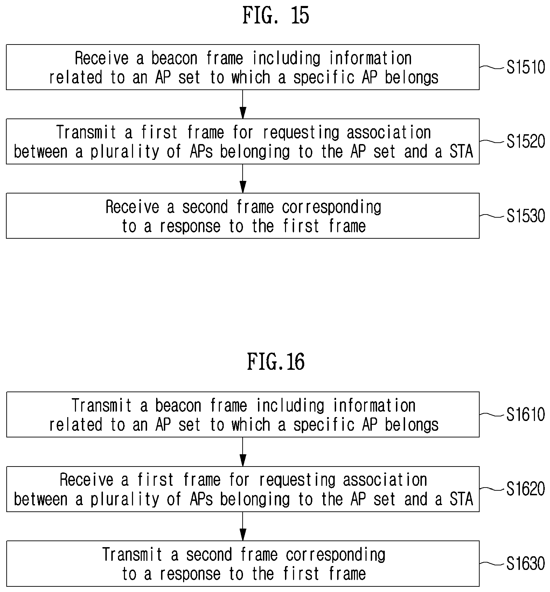

The examples of FIGS. 15 and 16 may correspond to some of the various examples of the present disclosure.

FIG. 15 is a diagram for explaining the operation of an STA for establishing multi-association according to an embodiment of the present disclosure.

The STA may receive a beacon frame including information related to an AP set to which the specific AP belongs, from a specific AP (S1510).

Here, the specific AP may correspond to the master AP described above in the present disclosure. For example, the specific AP may correspond to an AP configured to control and manage links with other APs among APs belonging to the AP set.

Additionally, the AP set may correspond to a multi-AP set in the present disclosure and may be configured with APs affiliated with to different AP MLDs that support multi-link (e.g., see FIG. 11).

For example, information related to a set of APs may include at least one of identification information for the set of APs, information for beacon transmission power, or information for a packet error rate associated with each AP belonging to the set of APs.

In this regard, information related to the AP set may be included in a reduced neighbor report (RNR) element included in the beacon frame. Specifically, information related to the AP set may be included subsequent to the multi-link device (MLD) parameter subfield in the target beacon transmission time (TBTT) information field in the RNR element (e.g., see FIG. 12).

The STA may transmit a first frame to a specific AP to request association (i.e., multi-association) between a plurality of APs belonging to the AP set and the STA (S1520). For example, the plurality of APs may be selected/determined based on at least one of information for the beacon transmission power or information for the packet error rate among the APs belonging to the AP set.

Afterwards, the STA may receive a second frame corresponding to a response to the first frame from a specific AP (S1530).

For example, the first frame may correspond to an association request frame, and the second frame may correspond to an association response frame.

In this regard, at least one of the first frame or the second frame may include association-related information for each AP included in the plurality of APs (e.g., see FIG. 13). As a specific example, the association-related information for each AP is configured in a subelement format within a specific element related to the AP set, and the specific element may further include common information for the AP set (e.g., see FIG. 13).

In this regard, the information related to the AP set in step S1510 may include partial information for each AP, and the combination-related information in steps S1520 and/or S1530 may include complete information for each AP.

Additionally or alternatively, the STA may transmit a probe request frame related to the set of APs to a specific AP, and receive a probe response frame corresponding to a response to the probe request frame from the specific AP (e.g., see FIG. 14).

The method performed by the STA described in the example of FIG. 15 may be performed by the first device (100) of FIG. 1. For example, one or more processors (102) of the first device (100) of FIG. 1 may be configured to receive a beacon frame from the AP (200) through one or more transceivers (106), transmit a first frame, and receive a second frame.

For example, one or more processors (102) of the first device (100) may be configured to decode information related to an AP set included in a beacon frame and configure a first frame to request association between a plurality of APs (200) belonging to the AP set and the first device (100), i.e., an STA. Additionally, one or more processors (102) of the first device (100) may be configured to decode a second frame corresponding to a response to the first frame and establish association with a plurality of APs (200).

Furthermore, one or more memories (104) of the first device (100) may store instructions for performing the method described in the example of FIG. 15 or the examples described above when executed by one or more processors (102).

FIG. 16 is a drawing for explaining the operation of an AP for establishing multi-association according to an embodiment of the present disclosure.

The AP may transmit a beacon frame containing information related to the AP set to which the AP belongs to the STA (S1610).

Here, the AP may correspond to the master AP described above in the present disclosure. For example, the AP may correspond to an AP set to control and manage links with other APs among APs belonging to the AP set.

The AP may receive a first frame from the STA to request association (i.e., multi-association) between a plurality of APs belonging to the AP set and the STA (S1620).

Afterwards, the AP may transmit a second frame corresponding to the response to the first frame to the STA (S1630).

In this regard, at least one of the first frame or the second frame may include association-related information for each AP included in the plurality of APs (e.g., see FIG. 13).

In the example of Fig. 16, the specific details of the AP set, information related to the AP set, the first frame, the second frame, and the combination-related information are the same as those described in the example of Fig. 15, so redundant descriptions are omitted.

The method performed by the STA described in the example of FIG. 16 may be performed by the second device (200) of FIG. 1. For example, one or more processors (202) of the second device (200) of FIG. 1 may be configured to transmit a beacon frame to the STA (100) through one or more transceivers (206), receive a first frame, and transmit a second frame.

For example, one or more processors (202) of the second device (200) may be configured to encode information related to an AP set to configure a beacon frame, decode a first frame for requesting association between a plurality of APs (200) belonging to the AP set and the first device (100), i.e., an STA, and configure a second frame corresponding to a response to the first frame based on the first frame.

Furthermore, one or more memories (204) of the second device (200) may store instructions for performing the method described in the example of FIG. 16 or the examples described above when executed by one or more processors (202).

In the conventional wireless LAN system, when performing roaming between APs due to movement of STA, etc., the association with the existing AP shall be released, and the authentication and association process for the new AP shall be performed again. That is, in the conventional wireless LAN system, the STA may only be associated with one AP. In this case, since the association process shall be performed again, a delay inevitably occurs until the roaming is completed.

In contrast, in the case of the method in the present disclosure, by forming multiple associations for a plurality of APs, a new association process is unnecessary when roaming between the APs. That is, according to the proposed method in the present disclosure, a new effect may be achieved that may alleviate a delay problem that may occur when roaming to another AP.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) in a wireless LAN system, the method comprising:
receiving, from a specific access point (AP), a beacon frame including information related to an AP set to which the specific AP belongs;
transmitting, to the specific AP, a first frame for requesting association between a plurality of APs belonging to the AP set and the STA; and
receiving, from the specific AP, a second frame corresponding to a response to the first frame,
wherein at least one of the first frame or the second frame includes association-related information for each AP included in the plurality of APs.

2. The method of claim 1,
wherein the information related to the AP set includes at least one of identification information for the AP set, information for beacon transmission power, or information for a packet error rate related to each AP belonging to the AP set.

3. The method of claim 1,
wherein the plurality of APs are selected based on at least one of the information for the beacon transmission power and the information for the packet error rate among APs belonging to the AP set.

4. The method of claim 1,
wherein the information related to the AP set is included in a reduced neighbor report (RNR) element included in the beacon frame.

5. The method of claim 4,
wherein the information related to the AP set is included subsequent to the multi-link device (MLD) parameter subfield in a target beacon transmission time (TBTT) information field within the RNR element.

6. The method of claim 1,
wherein the first frame corresponds to an association request frame and the second frame corresponds to an association response frame.

7. The method of claim 1,
wherein the information related to above AP set includes partial information for each AP, and
wherein the association-related information includes complete information for each AP.

8. The method of claim 1,
wherein the specific AP corresponds to an AP configured to control and manage links with other APs among APs belonging to the AP set.

9. The method of claim 1,
wherein the association-related information for each AP is configured with a subelement format within a specific element related to an AP set, and
wherein the specific element further includes common information for an AP set.

10. The method of claim 1, further comprising:
transmitting a probe request frame related to the AP set to the specific AP; and
receiving a probe response frame corresponding to a response to the probe request frame from the specific AP,
wherein the probe response frame includes association-related information for each AP belonging to the AP set.

11. The method of claim 1,
wherein the AP set is configured with APs affiliated with different AP MLDs that support multi-link.

12. An apparatus for a first station (STA) in a wireless local area network (WLAN) system, the apparatus comprising:
at least one transceiver; and
at least one processor connected to the at least one transceiver,
wherein the at least one processor is configured to:
receive, from a specific access point (AP), a beacon frame including information related to an AP set to which the specific AP belongs;
transmit, to the specific AP, a first frame for requesting association between a plurality of APs belonging to the AP set and the STA; and
receive, from the specific AP, a second frame corresponding to a response to the first frame,
wherein at least one of the first frame or the second frame includes association-related information for each AP included in the plurality of APs.

13. A method performed by an access point (AP) in a wireless LAN system, the method comprising:
transmitting, to a station (STA), a beacon frame including information related to an AP set to which the AP belongs;
receiving, from the STA, a first frame for requesting association between a plurality of APs belonging to the AP set and the STA; and
transmitting, to the STA, a second frame corresponding to a response to the first frame,
wherein at least one of the first frame or the second frame includes association-related information for each AP included in the plurality of APs.

14. An apparatus for an access point (AP) in a wireless local area network (WLAN) system, the apparatus comprising:
at least one transceiver; and
at least one processor connected to the at least one transceiver,
wherein the at least one processor is configured to:
transmit, to a station (STA), a beacon frame including information related to an AP set to which the AP belongs;
receive, from the STA, a first frame for requesting association between a plurality of APs belonging to the AP set and the STA; and
transmit, to the STA, a second frame corresponding to a response to the first frame,
wherein at least one of the first frame or the second frame includes association-related information for each AP included in the plurality of APs.

15. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 11.

16. At least one non-transitory computer-readable medium storing at least one instruction, wherein:
the at least one instruction controls a device to perform a method according to any one claim of claims 1 to 11 in a wireless local area network (WLAN) system by being executed by at least one processor.
